# EUROPEAN PATENT APPLICATION

(11) **EP 4 113 236 A1**
(43) Date of publication of application: **04.01.2023**
(21) Application number: 22180858.7
(22) Date of filing: 23.06.2022
(51) Int. Cl.: G05B 23/02

(54) **RUN-TIME RELIABILITY REPORTING FOR ELECTRICAL HARDWARE SYSTEMS**

(30) Priority: 01.07.2021 US 202117365973
(71) Applicant: Honeywell International Inc., Charlotte, NC 28202 (US)
(72) Inventor: K.N. DINESH, Kumar, Charlotte, 28202 (US); CHATURVEDI, Ganesh, Charlotte, 28202 (US)
(74) Representative: Houghton, Mark Phillip

(57) **Abstract**

A method and system for reliability reporting for electrical hardware can involve analyzing stress data referenced to a predicted reliability of electrical hardware, the stress data including real-time stress information related to the electrical hardware. Reliability data associated with the electrical hardware based on the real-time information and the predicted reliability of the electrical hardware can be calculated. The reliability data can be presented in a graphical user interface that displays indicators of the reliability data including runtime data associated with the electrical hardware.

## Description

### TECHNICAL FIELD

Embodiments are generally related to the field of reliability reporting for electrical hardware systems, such as, for example, battery energy storage systems. Embodiments also relate to reliability prediction models.

### BACKGROUND

The reliability of electrical hardware can be predicted based on some standards (e.g., MIL217) and prediction models, which in-turn can make use of proven failure modes and the failure rate of components used at specific environmental conditions. These predictions are helpful for the comparative performance benchmarking of products, since predictions are typically made for standard conditions. These models are not intended to provide actual real-life health information of hardware at runtime in the field where the subsystems may be undergoing various stresses, which may be far different from standard conditions.

In practice the environmental conditions at which each component of hardware operates may be different. Electrical stresses may vary, along with the operating duties and environmental parameters in which a hardware device and its electrical components may operate. For example, consider the case of two units of a given sensor type, with one sensor exposed to 70° C and the other sensor to 20° C. The first sensor may fail faster than the second sensor. Generally, the failure rate of electrical devices may depend on the ambient temperature to which the electrical devices may be exposed.

Currently, tools do not exist that adequately address reliability reporting for hardware such as sensors, battery energy storage systems, and other types of electrical hardware devices. Tools are not available, for example, which can provide a live reliability dashboard for a customer displaying the health conditions of hardware, the rate at which each unit is degrading in its 'health', and a predicted end-of-life (EOL) of given hardware based on the 'real' stress in field. Tools are also not available, which can provide a dashboard for an end user that displays the stress levels associated with electrical hardware and storage systems at run-time or near run-time. Tools are also not available which can provide reliability conditions for given hardware based on the field conditions and the real stress this hardware may have experienced during its tenure in the field. Furthermore, tools are not available, which can provide a customer or a user with information regarding the hardware health condition, which in turn may improve the preparedness of the maintenance team and reduce down time by proactively replacing parts, which may be close to failure, and ensuring that spare parts may be in stock for parts which may be nearing failure, etc.

### BRIEF SUMMARY

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the disclosed embodiments to provide for a method and system for reliability reporting for electrical hardware.

It is another aspect of the disclosed embodiments to provide for a method and system for reading, recording and analyzing critical stress parameters at runtime for electrical hardware.

It is a further aspect of the disclosed embodiments to provide for method and systems for generating live health/reliability information of hardware based on a comparison between a predicted reliability under standard condition versus the real stress the hardware may have experienced to date.

The aforementioned aspects and other objectives can now be achieved as described herein. In an embodiment, a method for reliability estimation, calculation and reporting for electrical hardware, can involve: analyzing stress data referenced to a predicted reliability of electrical hardware, the stress data including real-time stress information related to the electrical hardware; calculating reliability data associated with the electrical hardware based on the real-time information and the predicted reliability of the electrical hardware; and presenting the reliability data for display in a graphical user interface that provides a plurality of graphical user interface features indicative of the reliability data, wherein the reliability data includes runtime data associated with the electrical hardware, real-time reliability information and the real-time stress information related to the electrical hardware.

In an embodiment, presenting the reliability data can further involve presenting the reliability data to a computer system, wherein the computer system subsequently makes a maintenance shutdown decision based on the reliability data presented to the computer, system, the reliability data including the runtime data associated with the electrical hardware, real-time reliability information, and the real-time stress information related to the electrical hardware.

An embodiment of the method can further involve calculating the reliability data by correcting a predicted model based on real-time stress data gathered from electrical hardware in field-based electrical devices.

In an embodiment of the method, the electrical hardware can include one or more of: process control hardware, a battery, and/or a battery energy storage system, and so on.

In an embodiment of the method, the runtime data associated with the electrical hardware can include environmental parameters associated with the electrical hardware.

In an embodiment of the method, the runtime data associated with the electrical hardware can include physical parameters associated with the electrical hardware.

In an embodiment of the method, the runtime data associated with the electrical hardware can include electrical parameters associated with the electrical hardware.

In an embodiment of the method, the runtime data associated with the electrical hardware can include system parameters associated with the electrical hardware, the system parameters including an active state and a passive state of the electrical hardware.

In an embodiment of the method, the runtime data associated with the electrical hardware can include real-time reliability data usable for service operations and maintenance operations with respect to the electrical hardware.

In an embodiment of the method, the reliability data can include health/reliability information of the electrical hardware based on a comparison of the predicted reliability under a standard condition versus a real stress experienced to date by the electrical hardware.

In an embodiment, a system for reliability reporting, estimation, and calculation for electrical hardware, can include at least one processor, and a non-transitory computer-usable medium embodying computer program code. The computer-usable medium is operable to communicate with the at least one processor, the computer program code comprising instructions executable by the at least one processor and configured for: analyzing stress data referenced to a predicted reliability of electrical hardware, the stress data including real-time stress information related to the electrical hardware; calculating reliability data associated with the electrical hardware based on the real-time information and the predicted reliability of the electrical hardware; and presenting the reliability data for display in a graphical user interface that provides a plurality of graphical user interface features indicative of the reliability data, wherein the reliability data includes runtime data associated with the electrical hardware, real-time reliability information and the real-time stress information related to the electrical hardware.

In an embodiment of the system, the for presenting the reliability data can further include instructions configured for presenting the reliability data to a computer system, wherein the computer system subsequently makes a maintenance shutdown decision based on the reliability data presented to the computer, system, the reliability data including the runtime data associated with the electrical hardware, real-time reliability information, and the real-time stress information related to the electrical hardware.

In an embodiment of the system, the instructions for calculating the reliability data, can further include instructions for calculating the reliability data by correcting a predicted model based on real-time stress data gathered from electrical hardware in field-based electrical devices.

In an embodiment of the system, the electrical hardware can include, for example, process control hardware, a battery, and/or a battery energy storage system.

In an embodiment of the system, the runtime data associated with the electrical hardware include, for example, environmental parameters associated with the electrical hardware, physical parameters associated with the electrical hardware, and/or electrical parameters associated with the electrical hardware.

In an embodiment of the system, the runtime data associated with the electrical hardware can include system parameters associated with the electrical hardware, the system parameters including an active state and a passive state of the electrical hardware.

In an embodiment of the system, the runtime data associated with the electrical hardware can include real-time reliability data usable for service operations and maintenance operations with respect to the electrical hardware.

In an embodiment of the system, the reliability data can include health/reliability information of the electrical hardware based on a comparison of the predicted reliability under a standard condition versus a real stress experienced to date by the electrical hardware.

In another embodiment, a system for reliability reporting, estimation, and calculation for electrical hardware, can include at least one processor, and a non-transitory computer-usable medium embodying computer program code. The computer-usable medium is capable of communicating with the at least one processor, the computer program code comprising instructions executable by the at least one processor and configured for: analyzing stress data referenced to a predicted reliability of electrical hardware, the stress data including real-time stress information related to the electrical hardware; calculating reliability data associated with the electrical hardware based on the real-time information and the predicted reliability of the electrical hardware, wherein the reliability data is calculated by correcting a predicted model based on real-time stress data gathered from electrical hardware in field-based electrical devices; and presenting the reliability data for display in a human machine interface operable to display a plurality of user interface features indicative of the reliability data, wherein the reliability data includes runtime data associated with the electrical hardware, real-time reliability information and the real-time stress information related to the electrical hardware.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates a block diagram of a system for run-time reliability reporting for electrical hardware, in accordance with an embodiment;
FIG. 2 illustrates a pictorial diagram depicting a graphically displayed dashboard for run-time reliability reporting for electrical hardware, in accordance with an example embodiment;
FIG. 3 illustrates a flow chart of operations depicting logical operational steps of a method for capturing runtime environmental, physical and electrical stress information pertaining to electrical hardware, in accordance with an embodiment;
FIG. 4 illustrates a schematic view of a data-processing system, in accordance with an embodiment; and
FIG. 5 illustrates a schematic view of a software system including a module, an operating system, and a user interface, in accordance with an embodiment.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in an embodiment" or "in one embodiment" or "in an example embodiment" and variations thereof as utilized herein may or may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

As used herein, the term 'run-time', 'run time', or 'runtime' can relate to a device or system or process that operates in real time or close to real time, and which can implement a live calculation of reliability rather than an off-line calculation.

As used herein, the term 'hardware' can relate to the physical components of a system including electrical components and other electronic components such as, for example, batteries. Examples of 'hardware' can include electrical hardware such as a BESS (Battery Energy Storage System), and process control hardware. The term 'hardware' may also relate to an 'electrical hardware system' and components such as semiconductor hardware, switch gears, fuses, battery storage systems, etc.

An embodiment can be implemented in the context of electrical hardware such as a BESS (Battery Energy Storage System). It should be appreciated that the discussion here regarding a BESS is presented for general illustrative and exemplary purposes only and should not be considered a limiting feature of the embodiments. That is, the disclosed approach can be used for other types of electrical hardware, such as, for example, various types of sensors, and other electrical systems, particular in the context of industrial automation and 'in the field' operations such as in industrial processing facilities. The disclosed embodiments are thus not limited to BESS applications. BESS applications and systems are discussed herein, in the context of a use case or an example embodiment.

A BESS can collect and process several physical as well as electrical parameters related to ESS (Energy Storage System) hardware and cells, which can be critical for reliability calculations of the BESS. Below are some of the parameters, which can be considered.

Ambient Temperature. Most BESS hardware can be provided with temperature probes wherein the ambient temperature data measured by such temperature probes can be available for system software. Example BESS hardware may include battery racks, a system cabinet, etc. Generally, a BESS can include a battery management system, which can collect cell level temperature data during operations. Once the ambient temperature is known, the possible local ambient temperature experienced by each subsystem can be calculated (or in some cases it may be possible to measure local ambient - example cells). With this information, the possible ambient temperature experienced by each subcomponent, for example, can be calculated. This may be critical information. In case more accurate temperature measurements may be necessary, we can insist that the customer or user provide more than one temperature probe, for example, where necessary.

In certain cases, the rate of change of temperature may be critical information for use with reliability and failure mode calculations. For example, if there is a quick ramp-up or ramp-down of temperature, solder joints may become stressed at a much higher level than a steady High' temperature.

Operating Duty and Electrical Stress. A number of ESS sub-systems may possess real-time information regarding the operating duty and electrical stress experienced by the ESS and its various components and sub-systems. In some cases, this information may need to be derived based on available information. Based on this information, exact power dissipation and stress levels on each of the critical subsystem in a given unit can be calculated. Thus, data indicative of operating duty and electrical stress can be critical for reliability calculations.

Active/Standby State of Hardware. Some subsystems of a BESS may be in active/passive standby at run-time in a BESS. For example, one unit out of four HVAC units may be in stand-by during normal operations. This information may helpful for use in generating generate a health state and de-ratings applicable for various subsystems of the BESS or other components, such as the aforementioned HVAC units.

BESS Charging/Discharging Profiles. This information can be critical when it comes to BESS battery life and related reliability calculations. Monitoring and recording of cell charging/discharging profiles, SOC & SOH information, any specific instance of deep charging/discharging, any overheating of cells, etc can be critical information, which can contribute to cell life estimation.

MIL217. The acronym 'MIL217' refers to a reliability prediction standard and/or a model. MIL217 has been used by both commercial companies and the defense industry, and contains failure rate models for numerous electronic components such as integrated circuits, transistors, diodes, resistors, capacitors, relays, switches, connectors and so on. Reliability predictions are an important tool for making design trade-off decisions and estimating future system reliability. They are often used for making initial product support decisions such as how many spares are required to support fielded systems. Inaccurate predictions can lead to overly conservative designs and/or excessive spare parts procurement resulting in additional life cycle cost (LCC).

Other Parameters. Additional information may be needed for a more accurate calculation of reliability parameters. That is, some additional information can be fetched without adding too much to the cost to the cabinets. An example of such additional information may include data derived from a humidity sensor at the cabinet level. In this case, relative humidity data collected from a humidity sensor can be used as additional information for calculating the stress on subsystems. Other additional information can include power supply output voltage levels. The voltage readings and related variations can be a source of helpful information. Vibration data collected from a vibration sensor can also be a source of additional information. Vibration data is useful for sensing cabinet-level vibration. Shock and vibration data can be contribute, for example, to the reliability calculations.

Once these parameters are gathered from each subsystem, in soft-real time mode (or even by periodic fetch), this information can be used to calculate the practical stress levels in each of the electrical hardware, cable joints, cells and so on. Based on the real stress parameters, corrections can be applied to the predicted reliability profile (e.g., MIL217) and provide the customer with reliability data, which can be more accurate considering a practical field scenario for each hardware subsystem. Apart from run-time stress data, the stress experienced by hardware during factory test in production, transportation and shipment, etc., also can be accounted so that the calculations can be more accurate.

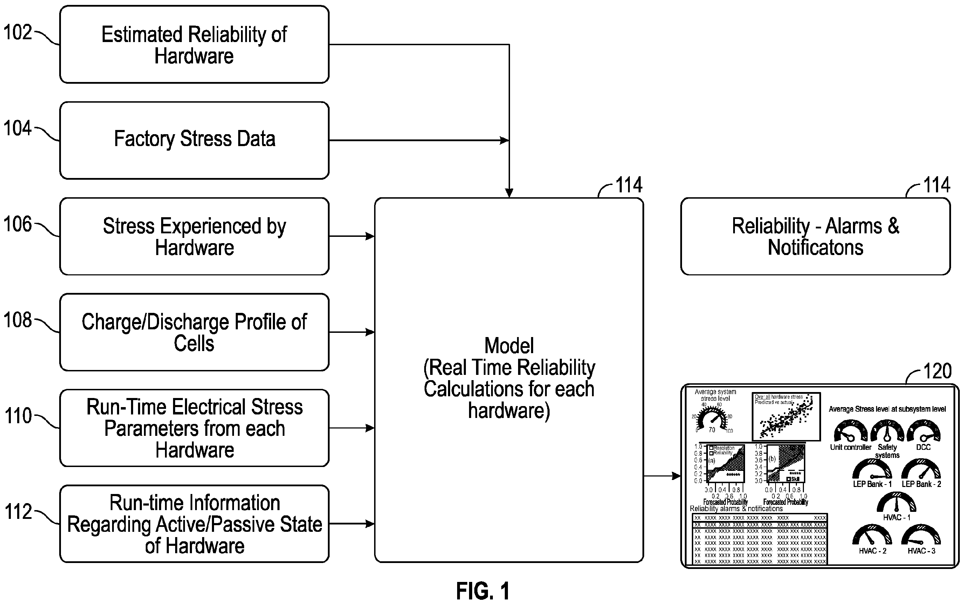

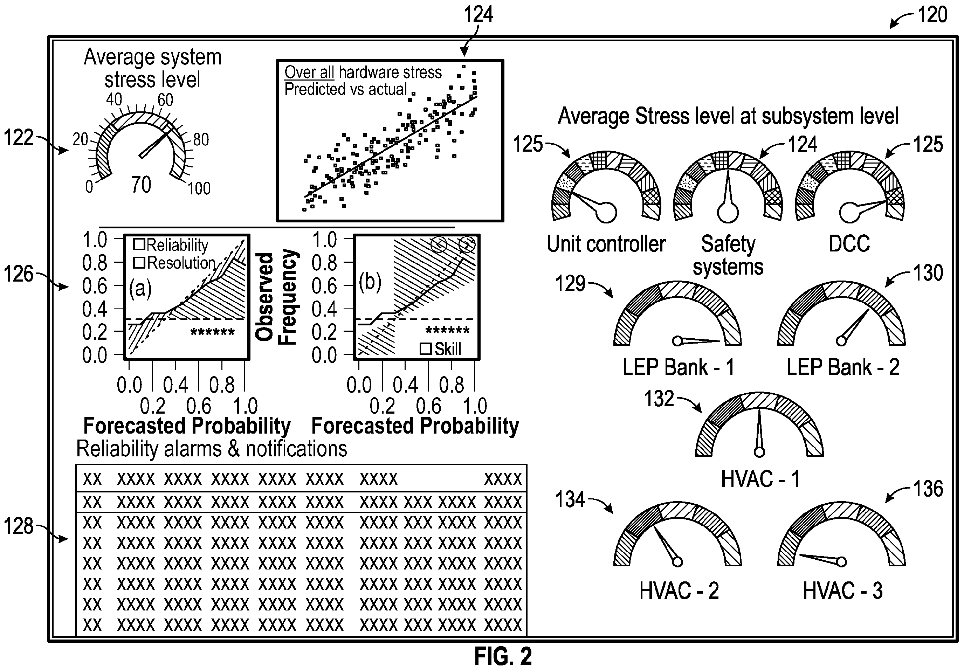

FIG. 1 illustrates a block diagram of a system 100 for run-time reliability reporting for electrical hardware (e.g., BESS hardware), in accordance with an embodiment. Note that the system 100 shown in FIG. 1 can be used for improving the efficiency of electrical hardware by providing feedback to a user in the context of reliability data displayed in a dashboard 120, an example of which is also depicted in FIG. 2.

The system 100 includes functions, acts and/or data as specified in the blocks shown in FIG. 1. As shown at block 102, data indicative of an estimated reliability of hardware (e.g., at a design stage by MIL217) can be subject to soft real time reliability calculations as shown at block 114. Additional parameters and data such as factory stress data, as depicted at block 104 and stress data experienced by hardware (e.g., as during a thermal soak in a factory) as shown at block 106 can also be subject to the soft real time reliability calculations depicted at block 114. Furthermore, a charge/discharge profile of cells, as illustrated at block 108, and run-time electrical stress parameters from each hardware, as depicted at block 110, can be subject to the soft real time reliability calculations depicted at block 114. In addition, run time information regarding the active/passive state of hardware, as indicated at block 112, can be subject to the soft real time reliability calculations depicted at block 114. Note that the term 'cell' as utilized herein can relate to the cells of an ESS.

The soft real time reliability calculations indicated at block 114 can result in the generation of reliability alarms and notifications, as shown at block 116 and can be provided as data to the graphically displayed dashboard 120. Note that the alarms and notifications indicated at block 116 can be pushed in some embodiments to particular teams or organizations based on reliability calculation results and trends determined based on the calculations performed, as shown at block 114.

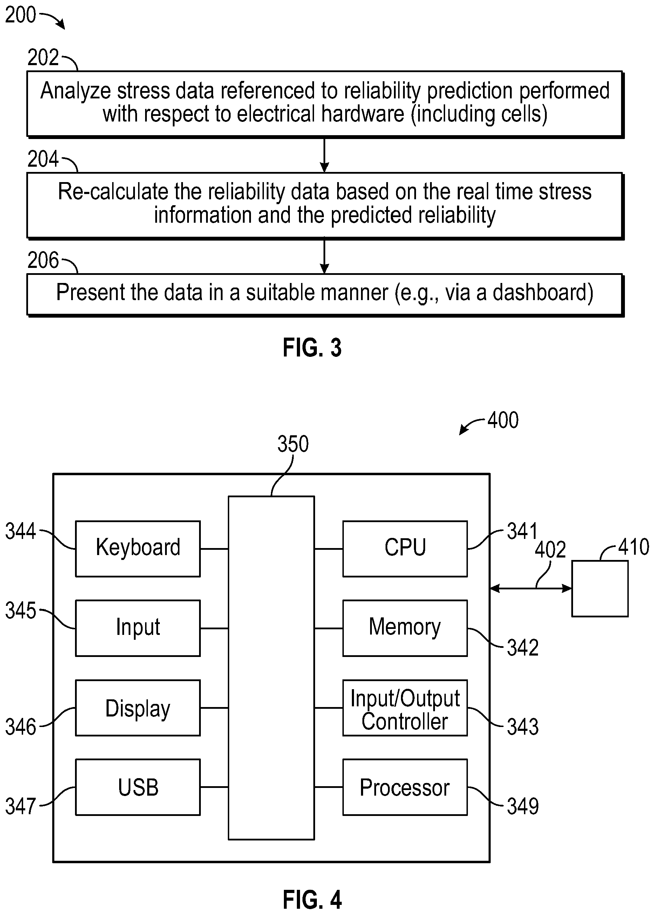

Note that the term 'dashboard' as utilized herein can relate to a type of graphical user interface (GUI) that can display at-a-glance views of key information and indicators relative to a particular objective or process. The term 'GUI or 'graphical user interface' can relate to a form of machine-user interface or view that can allow a user to visualize and interact with digital data through graphical icons surfaced on a computer display (e.g., such as the display 346 shown in FIG. 4). A dashboard may be accessible by a web browser and can be linked to regularly updating data sources including the various types of data indicated at blocks 102, 104, 106, 108, 110, and 112. Examples of a GUI that may be implemented in accordance with the embodiments can include a human machine interface (HMI), various types of graphically displayed GUI indicators, an audio alarm, and/or mobile 'app' platform GUI features. In general, data can be provided to an analytics tool for machine learning or autonomous decisions by a computing system, which can then generate data for display and user interactivity through a GUI such as described above.

The term 'stress' as utilized herein can relate to environmental, electrical or any other parameters, which may impact the life expectancy of the part. The term 'stress' can also involve a duty ratio (e.g., ON time vs. OFF time) including the number of ON-OFF cycles of an electrical device including its electrical hardware. The term 'stress' can also relate to external parameters such as, for example, a surge (e.g., due to a lighting strike), which may degrade the electrical device. The term 'stress' as utilized herein can also relate to an electro static discharge, which may lead to degraded performance of the electrical device in certain situations. Stress may also be due to mechanical problems such as, for example, vibration from a fan or a motor operating in close premises with the electrical device.

FIG. 2 illustrates a pictorial diagram depicting the graphically displayed dashboard 120 for run-time reliability reporting for electrical hardware, in accordance with an example embodiment. It should be appreciated that the embodiment shown in FIG. 2 represents a raw example of a human machine interface (HMI) and is not considered a limiting feature of the disclosed embodiments. That is, various other types of interfaces, GUI's, HMI's and so on can be implemented in accordance with the disclosed embodiments.

Once the calculations are finished as indicated at block 114, a great deal of resulting information may be available, which can be useful to, for example, an operations and maintenance (O&M) team for a processing or industrial facility or organization. This information can be displayed in the context of a GUI dashboard such as the dashboard 120 to provide a live health status for a particular piece or group of hardware so that the O&M team can optimize and coordinate maintenance procedures.

In the example dashboard 120, various sections can be graphically displayed with key performance indicators. For example, section 122 may graphically display an indicators of an average system stress level. Section 124 may graphically display data regarding over all hardware stress including predicted versus actual data in the context of a graph. Section 126 may graphically display an indicator of forecasted probability data.

Reliability and alarm notifications such as discussed previously with respect to block 116 in FIG. 1 may be graphically displayed in section 128 of the dashboard 120. A section 126 may graphically display indicators of the average stress level at the subsystem level. Furthermore, a section 123 may display unit controller data. A section 124 may display an indicator of safe system data, and a section 125 may display DCC information. Sections 129 and 130 can be used to graphically display an indicator of LFP (Lithium Iron Phosphate) bank data, while sections 132, 134, and 136 can graphically display indicators of heating, ventilation, and air conditioning (HVAC) information related, respectively, to first, second and third HVAC units. Note that Lithium Iron Phosphate (LiFePO4, LFE) relates to a type of Li-Ion rechargeable *battery* for high power applications.

The system 100 can perform predictions of hardware failures based on real time stress data and the predicted trend information. Furthermore, the system 100 can provide information regarding seasonal failure predictions, which can be critical information for maintenance. System 100 can thus be of high value for large installations where ambient conditions are harsh with possibly higher failure rates.

FIG. 3 illustrates a flow chart of operations depicting logical operational steps of a method 200 for capturing runtime environmental, physical and electrical stress information pertaining to an electrical hardware system such as for example, electrical hardware and battery storage devices, in accordance with an embodiment. The method 200 shown in FIG. 3 can be used to implement and or operate the system 100 depicted in 100.

As shown at block 202, a step or operation can be implemented to analyze the stress data referenced to reliability prediction performed for the electrical hardware (e.g., including cells). Next as shown at block 204, a step or operation can be implemented to re-calculate the reliability figures based on the real time stress information and the predicted reliability. This operation can be implemented by, for example, the model for real time reliability calculations depicted at block 114 in FIG. 1.

Note that the step or operation depicted at block 204 can involve a calculation of real-time reliability data. This calculation can be accomplished by correcting a predicted model based on real time stress data gathered from the field (e.g., from electrical hardware and electrical devices operating in an industrial facility).

Thereafter, a step or operation can be implemented to present the resulting data in a suitable manner (e.g., via dashboard 120), as shown at block 206. The step or operation shown at block 206 may involve presenting the resulting data via a GUI and/or HMI such as the dashboard 120. The step or operation shown at block 206 can also involve presenting the resulting data (e.g., real-time reliability data) to another computer system, which can then make a decision such as a maintenance shutdown. Thus, the real-time reliability data can be presented to another computing device, and not only a GUI or HMI such as the dashboard 120.

Note that the real time stress information discussed above with respect to block 204 can include parameters such as, but not limited to environmental parameters, physical parameters, electrical parameters, and system parameters. Example environmental parameters may include temperature and humidity data. Example physical parameters may include vibration and shock data. Example electrical parameters may include data such as a current, load types and duty cycles. Example system parameters may include information related to the active and passive state of hardware. It can be appreciated that the method 200 shown in FIG. 3 can be applied to but not limited to process control hardware.

The disclosed approach (e.g., method 200 / system 100) can result in the generation and display of real-time reliability data that can be used for service and maintenance operations. Using this approach, failure rates may be more accurately predicted for a given hardware based on real time reliability data. Furthermore, the real-time reliability data can be used for generating trend prediction data. Seasonal stress information can also be generated to support maintenance and service operations. Furthermore, the calculations performed by, for example, the model depicted at block 114 in FIG. 1 can be accomplished including other known stress information applicable for the electrical hardware. The resulting information can be presented in the dashboard 120 at different levels of abstractions for the people performing plant operations at different levels. In addition, the real-time reliability and stress data collected can be made use for spare part management in some instances.

As can be appreciated by one skilled in the art, embodiments can be implemented in the context of a method, data processing system, or computer program product. Accordingly, embodiments may take the form of an entirely hardware embodiment, an entirely software embodiment or an embodiment combining software and hardware aspects all generally referred to herein as a "circuit" or "module." Furthermore, embodiments may in some cases take the form of a computer program product on a computer-usable storage medium having computer-usable program code embodied in the medium. Any suitable computer readable medium may be utilized including hard disks, USB Flash Drives, DVDs, CD-ROMs, optical storage devices, magnetic storage devices, server storage, databases, etc.

Computer program code for carrying out operations of the present invention may be written in an object oriented programming language (e.g., Java, C++, etc.). The computer program code, however, for carrying out operations of particular embodiments may also be written in procedural programming languages, such as the "C" programming language or in a visually oriented programming environment, such as, for example, Visual Basic.

The program code may execute entirely on the user's computer, partly on the user's computer, as a stand-alone software package, partly on the user's computer and partly on a remote computer or entirely on the remote computer. In the latter scenario, the remote computer may be connected to a user's computer through a bidirectional data communications network such as a local area network (LAN) or a wide area network (WAN), a wireless local area network (WLAN), wireless data network e.g., Wi-Fi, Wimax, 802.xx, and/or a cellular network or the bidirectional connection may be made to an external computer via most third party supported networks (for example, through the Internet utilizing an Internet Service Provider).

The embodiments are described at least in part herein with reference to flowchart illustrations and/or block diagrams of methods, systems, and computer program products and data structures according to embodiments of the invention. It will be understood that each block or feature of the illustrations, and combinations of blocks or features, can be implemented by computer program instructions. These computer program instructions may be provided to a processor of, for example, a general-purpose computer, special-purpose computer, or other programmable data processing apparatus to produce a machine, such that the instructions, which execute via the processor of the computer or other programmable data processing apparatus, create means for implementing the functions/acts specified in the block or blocks or elsewhere herein. To be clear, the disclosed embodiments can be implemented in the context of, for example a special-purpose computer or a general-purpose computer, or other programmable data processing apparatus or system. For example, in some embodiments, a data processing apparatus or system can be implemented as a combination of a special-purpose computer and a general-purpose computer.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the various block or blocks, flowcharts, and other architecture illustrated and described herein.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the block or blocks.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

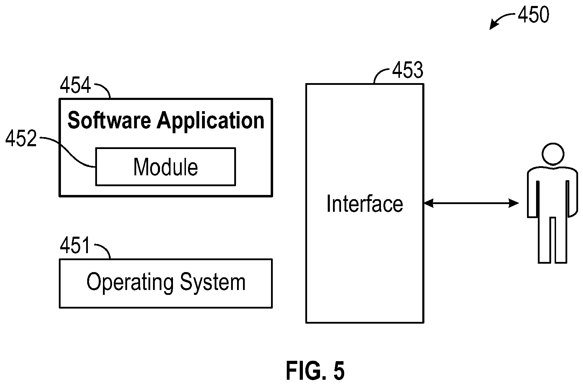

FIG. 4 and FIG. 5 are shown only as exemplary diagrams of data-processing environments in which example embodiments may be implemented. It should be appreciated that FIG. 4 and FIG. 5 are only exemplary and are not intended to assert or imply any limitation with regard to the environments in which aspects or embodiments of the disclosed embodiments may be implemented. Many modifications to the depicted environments may be made without departing from the spirit and scope of the disclosed embodiments.

As illustrated in FIG. 4, an embodiment may be implemented in the context of a data-processing system 400 that can include, for example, one or more processors such as a CPU (Central Processing Unit) 341 and/or other another processor 349 (e.g., microprocessor, microcontroller, etc), a memory 342, an input/output controller 343, a peripheral USB (Universal Serial Bus) connection 347, a keyboard 344 and/or another input device 345 (e.g., a pointing device, such as a mouse, track ball, pen device, etc.), a display 346 (e.g., a monitor, touch screen display, etc) and/or other peripheral connections and components.

As illustrated, the various components of data-processing system 400 can communicate electronically through a system bus 350 or similar architecture. The system bus 350 may be, for example, a subsystem that transfers data between, for example, computer components within data-processing system 400 or to and from other data-processing devices, components, computers, etc. The data-processing system 400 may be implemented in some embodiments as, for example, a server in a client-server based network (e.g., the Internet) or in the context of a client and a server (i.e., where aspects are practiced on the client and the server).

In some example embodiments, data-processing system 400 may be, for example, a standalone desktop computer, a laptop computer, a smartphone, a tablet computing device, a networked computer server, and so on, wherein each such device can be operably connected to and/or in communication with a client-server based network or other types of networks (e.g., cellular networks, Wi-Fi, etc). The data-processing system 400 can communicate with other devices such as, for example, an electronic device 410. Communication between the data-processing system 400 and the electronic device 410 can be bidirectional, as indicated by the double arrow 402. Such bidirectional communications may be facilitated by, for example, a computer network, including wireless bidirectional data communications networks.

FIG. 5 illustrates a computer software system 450 for directing the operation of the data-processing system 400 depicted in FIG. 4. Software application 454, stored for example in the memory 342 can include one or more modules such as module 452. The computer software system 450 also can include a kernel or operating system 451 and a shell or interface 453. One or more application programs, such as software application 454, may be "loaded" (i.e., transferred from, for example, mass storage or another memory location into the memory 342) for execution by the data-processing system 400. The data-processing system 400 can receive user commands and data through the interface 453; these inputs may then be acted upon by the data-processing system 400 in accordance with instructions from operating system 451 and/or software application 454. The interface 453 in some embodiments can serve to display results, whereupon a user (represented as a figure of a person at the right side of FIG. 4) may supply additional inputs or terminate a session. The software application 454 can include module(s) 452, which can, for example, implement instructions, steps or operations such as those discussed herein. Module 452 may also be composed of a group of modules and/or sub-modules.

The following discussion is intended to provide a brief, general description of suitable computing environments in which the system and method may be implemented. The disclosed embodiments can be described in the general context of computer-executable instructions, such as program modules, being executed by a single computer. In most instances, a "module" can constitute a software application, but can also be implemented as both software and hardware (i.e., a combination of software and hardware).

Generally, program modules include, but are not limited to, routines, subroutines, software applications, programs, objects, components, data structures, etc., that can perform particular tasks or which can implement particular data types and instructions. Moreover, those skilled in the art will appreciate that the disclosed method and system may be practiced with other computer system configurations, such as, for example, hand-held devices, multi-processor systems, data networks, microprocessor-based or programmable consumer electronics, networked PCs, minicomputers, mainframe computers, servers, and the like.

Note that the term *module* as utilized herein may refer to a collection of routines and data structures that perform a particular task or implements a particular data type. Modules may be composed of two parts: an interface, which lists the constants, data types, variable, and routines that can be accessed by other modules or routines, and an implementation, which may be private (e.g., accessible only to that module) and which can include source code that actually implements the routines in the module. The term *module* can also relate to an application, such as a computer program designed to assist in the performance of a specific task, such as implementing the steps, operations or instructions described herein.

The system 100 depicted in FIG. 1 and the method 200 shown in FIG. 3 can be implemented at least in part by a module (or group of modules). The module 452 shown in FIG. 4 can implement for example, the instructions, steps or operations depicted in FIG. 1 with respect to blocks 102, 104, 106, 108, 110, and 112. The module 452 shown in FIG. 4 can also implement the instructions, steps or operations depicted in FIG. 3 with respect to blocks 202, 204, and 206.

Based on the foregoing, it can be appreciated that preferred and alternative embodiments are disclosed herein. For example, in a

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

## Claims

1. A method for reliability estimation, calculation and reporting for electrical hardware, comprising:
analyzing stress data referenced to a predicted reliability of electrical hardware, the stress data including real-time stress information related to the electrical hardware;
calculating reliability data associated with the electrical hardware based on the real-time information and the predicted reliability of the electrical hardware; and
presenting the reliability data for display in a graphical user interface that provides a plurality of graphical user interface features indicative of the reliability data, wherein the reliability data includes runtime data associated with the electrical hardware, real-time reliability information and the real-time stress information related to the electrical hardware.

2. The method of claim 1 wherein presenting the reliability data further comprises presenting the reliability data to a computer system, wherein the computer system subsequently makes a maintenance shutdown decision based on the reliability data presented to the computer, system, the reliability data including the runtime data associated with the electrical hardware, real-time reliability information, and the real-time stress information related to the electrical hardware.

3. The method of claim 1 wherein calculating the reliability data by correcting a predicted model based on real-time stress data gathered from electrical hardware in field-based electrical devices.

4. The method of claim 1 wherein the electrical hardware comprises at least one of:
process control hardware;
a battery; or
a battery energy storage system.

5. The method of claim 1 wherein the runtime data associated with the electrical hardware include environmental parameters associated with the electrical hardware.

6. The method of claim 1 wherein the runtime data associated with the electrical hardware comprise physical parameters associated with the electrical hardware.

7. The method of claim 1 wherein the runtime data associated with the electrical hardware comprise electrical parameters associated with the electrical hardware.

8. A system for reliability reporting, estimation, and calculation for electrical hardware, comprising:
at least one processor; and
a non-transitory computer-usable medium embodying computer program code, the computer-usable medium capable of communicating with the at least one processor, the computer program code comprising instructions executable by the at least one processor and configured for:
analyzing stress data referenced to a predicted reliability of electrical hardware, the stress data including real-time stress information related to the electrical hardware;
calculating reliability data associated with the electrical hardware based on the real-time information and the predicted reliability of the electrical hardware; and
presenting the reliability data for display in a graphical user interface that provides a plurality of graphical user interface features indicative of the reliability data, wherein the reliability data includes runtime data associated with the electrical hardware, real-time reliability information and the real-time stress information related to the electrical hardware.

9. A system for reliability reporting, estimation, and calculation for electrical hardware, comprising:
at least one processor; and
a non-transitory computer-usable medium embodying computer program code, the computer-usable medium capable of communicating with the at least one processor, the computer program code comprising instructions executable by the at least one processor and configured for:
analyzing stress data referenced to a predicted reliability of electrical hardware, the stress data including real-time stress information related to the electrical hardware;
calculating reliability data associated with the electrical hardware based on the real-time information and the predicted reliability of the electrical hardware, wherein the reliability data is calculated by correcting a predicted model based on real-time stress data gathered from electrical hardware in field-based electrical devices; and
presenting the reliability data for display in a human machine interface operable to display a plurality of user interface features indicative of the reliability data, wherein the reliability data includes runtime data associated with the electrical hardware, real-time reliability information and the real-time stress information related to the electrical hardware.

10. The system of claim 9 wherein the instructions for presenting the reliability data further comprise instructions configured for presenting the reliability data to a computer system, wherein the computer system subsequently makes a maintenance shutdown decision based on the reliability data presented to the computer, system, the reliability data including the runtime data associated with the electrical hardware, real-time reliability information, and the real-time stress information related to the electrical hardware.
